# EUROPEAN PATENT SPECIFICATION

(11) **EP 2 550 869 B1**
(45) Date of publication and mention of the grant of the patent: **15.02.2017**
(21) Application number: 12170269.0
(22) Date of filing: 31.05.2012
(51) Int. Cl.: A23G 9/30, A23G 9/28

(54) **Device for dispensing liquid or semi-liquid food products**
Vorrichtung zur Ausgabe flüssiger oder halbflüssiger Lebensmittelprodukte
Dispositif de distribution de produits alimentaires liquides ou semi-liquides

(30) Priority: 28.07.2011 IT BO20110058 U
(43) Date of publication of application: 30.01.2013
(73) Proprietor: ALI S.p.A. - CARPIGIANI GROUP, 20123 Milano (IT)
(72) Inventor: Cocchi, Andrea, 40012 CALDERARA DI RENO (Bologna) (IT); Lazzarini, Roberto, 42100 Reggio Emilia (IT)
(74) Representative: Milli, Simone

(56) References cited:
- EP-A1- 0 821 880
- EP-A2- 2 095 720
- US-A- 4 711 376
- US-B1- 6 299 025

## Description

This invention relates to a device for dispensing liquid or semi-liquid food products.

More specifically, this invention relates to a dispensing device which is mounted on machines for making and instantly dispensing frozen desserts such as "soft gelato" or "artisan gelato".

The dispensing device is also suitable for mounting on machines for making and instantly dispensing frozen desserts such as granitas, sorbets and the like.

The device is also suitable for mounting on machines for making and instantly dispensing heated desserts such as chocolate, Bavarian creams, custards and the like.

These machines, **such as the one disclosed in the document** EP 2095720 A2**,** usually have a product collection bin, a product processing cylinder located downstream of the collection bin, a dispensing tap mounted at the outlet of the cylinder and a cooling and/or heating circuit for the product being processed in the cylinder.

More specifically, as is known, the dispensing taps comprise, internally of a duct, a first port connected with the outlet of the processing cylinder and a second outlet port for dispensing the processed product.

Also mounted inside the duct is a plunger which is movable between a first position, where the duct is open, and a second position, where the duct is closed, so as to prevent the product from coming out when not required.

Between one serving and the next, a product portion nevertheless remains trapped inside the duct.

This leads to the formation of bacterial charges inside the duct. These bacterial charges, if they are not removed promptly, are likely to propagate into the processing cylinder, with the risk of spoiling the product inside the cylinder.

Moreover, the stagnant product inside the duct can also lead to clotting which clogs up the duct itself, thus hindering or preventing the product from being correctly dispensed.

Furthermore, the lever system by which the plunger is moved in the prior art devices is extremely complex.

The device is particularly difficult to dismantle into its individual parts in order to clean the duct.

This invention therefore has for an aim to provide a device for dispensing liquid or semi-liquid food products and whose parts can be quickly and properly cleaned.

Another aim of the invention is to provide a device for dispensing liquid or semi-liquid food products, which can be easily disassembled and reassembled and which allows easy access to the duct inside it. The technical purpose indicated and the aims specified are substantially achieved by a device as described in the independent claim 1, appended hereto.

These and other features of the invention will become more apparent from the following detailed description of a preferred, non-limiting embodiment of it, with reference to the accompanying drawings, in which:
- Figure 1 shows, in a schematic side view, a machine comprising a device according to this invention;
- Figure 2 shows, in a schematic side view, a device according to the invention in a first operating configuration;
- Figure 3 shows, in a schematic side view, the device of Figure 2 in a second operating configuration;

- Figure 4 shows, in a schematic side view, the device of Figure 2 in a third operating configuration;
- Figure 5 is a perspective view of a first detail of the device;
- Figure 6 is a perspective view of a second detail of the device.

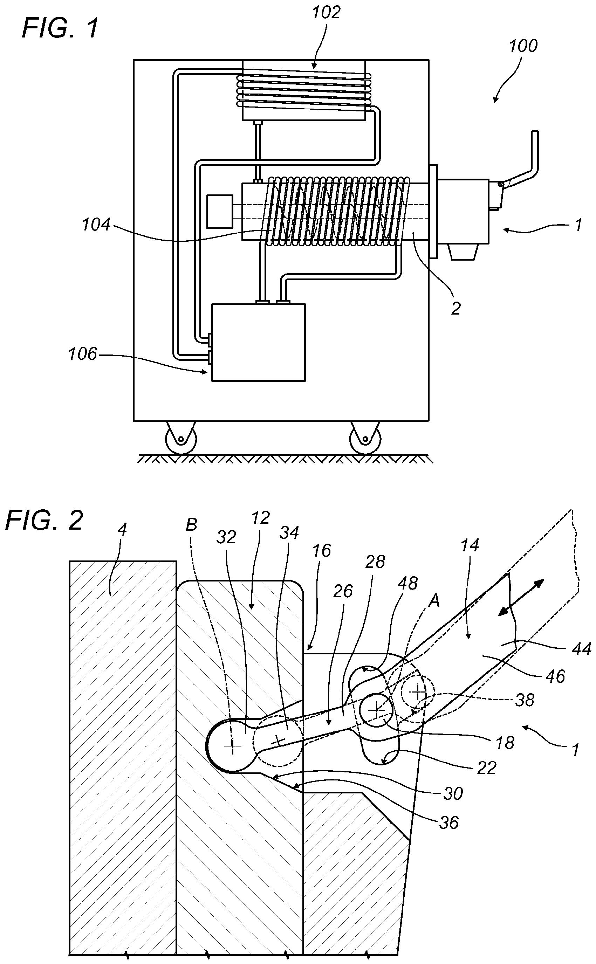

As illustrated in Figure 1, the numeral 1 denotes a device for dispensing liquid or semi-liquid food products according to this invention.

More specifically, Figure 1 also schematically illustrates a machine 100 which the dispensing device 1 is mounted on. The machine 100 comprises a product collection bin 102, a product processing cylinder 2 located downstream of the collection bin 102, a motor-driven stirrer 104 connected to the cylinder 2 and designed to mix the product being processed, a cooling and/or heating circuit 106 for the product being processed and/or dispensed, and a dispensing device 1 according to this invention, mounted at the outlet of the processing cylinder 2. As schematically illustrated in Figure 2, the device 1 comprises a supporting member 4 mounted at the outlet of the processing cylinder 2 which has a dispensing duct 6 for the processed product. More specifically, the dispensing duct 6 has a product inlet port 8, in communication with the outlet of the processing cylinder 2, and a product dispensing port 10.

The device 1 also comprises a shutter 12, which is at least partly inserted in the dispensing duct 6 and which is movable between a duct 6 and dispensing port 10 closed first position, and a duct 6 and dispensing port 10 open second position, and a shutter 12 actuating lever 14 connected to the supporting member 4, for moving the shutter 12 from the closed first position to the open second position, and vice versa.

The device 1 further comprises means 16 for rapid assembly/disassembly of the lever 14 to/from the supporting member 4.

The lever 14 is in the form of a curved rod 44, forming a first end 28 engageable with the supporting member 4, and a second end 46 designed to be gripped by an external operator in order to actuate the lever 14 itself.

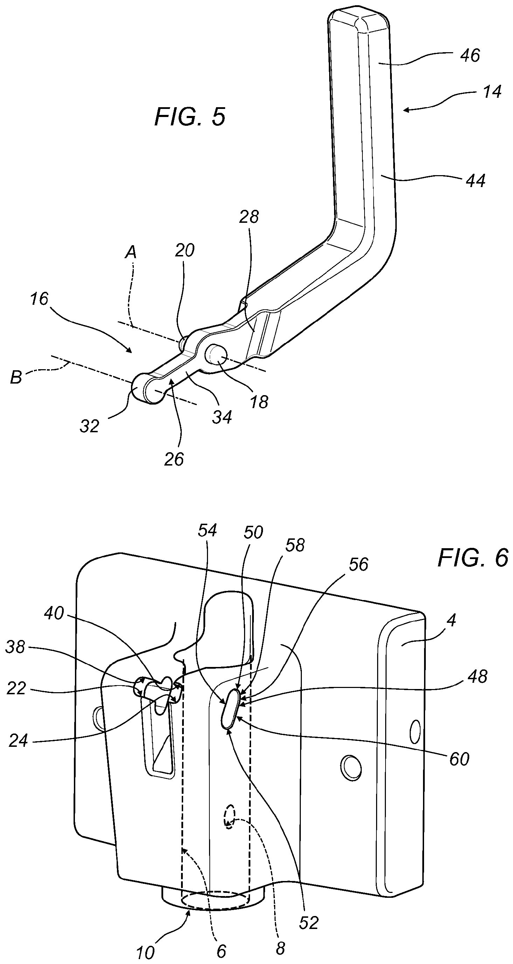

As shown more clearly in Figure 5, the lever 14 also has a first pin 18 and a second pin 20, aligned with each other, which are inserted in respective sockets 22,24 formed in the supporting member 4 (Figures 2 and 6) to allow the lever 14 to be turned about an axis A.

The pins 18,20 are located at the first end 28. Preferably, the pins 18,20 are substantially hemispherical in shape.

The lever 14 also has a protrusion 26 which extends from the first end 28 of the lever 14.

The protrusion fits into a socket 30 formed in the shutter 12 (Figure 2).

More precisely, the protrusion 26 allows the shutter 12 to move from the open first position to the closed second position, and vice versa, when the lever 14 is turned about the axis A.

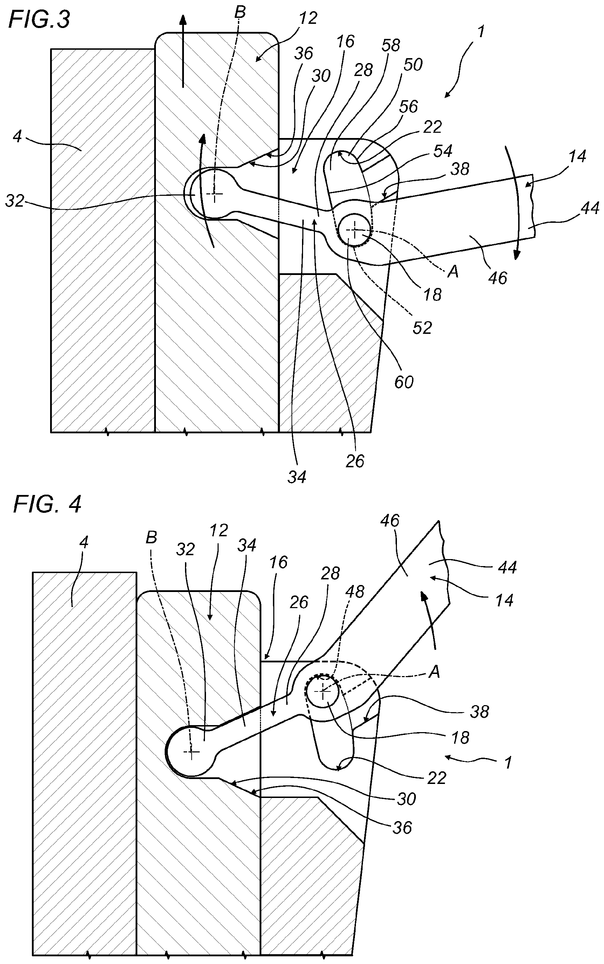

In other words, as may be inferred from Figure 3, turning the lever 14 about the axis A away from the supporting member 4 produces a movement of the shutter 12 towards the dispensing duct 6 open second position.

Vice versa, turning the lever 14 about the axis A towards the supporting member 4 produces a movement of the shutter 12 towards the dispensing duct 6 closed position.

More specifically, the protrusion 26 has a first portion 32 and a second portion 34 (Figure 6).

As shown in Figure 2, the first portion 32 is engaged directly in the socket 30 of the shutter 12.

More specifically, the first portion 32 has a substantially cylindrical shape.

With regard to the latter aspect, the socket 30 of the shutter 12 has a profile which is shaped to match the profile of the first portion 32.

This allows and facilitates the relative rotation between the protrusion 26 and the shutter 12, during the movement of the latter as a result of actuation of the lever 14.

More precisely, also in connection with what is stated above regarding the movement of the shutter 12, actuating the lever 14 about the axis A causes relative rotation between the protrusion 26 and the shutter 12 about an axis B.

Further, making the profiles of the protrusion 26 and of the socket 20 of the shutter 12 shaped to match each other advantageously provides a more stable connection between the lever 14 and the shutter 12.

The means 16 for the rapid assembly/disassembly of the lever 14 to/from the supporting member 4 are defined by the first pin 18 and the second pin 20 of the lever 14, by the sockets 22,24 of the supporting member 4 in which the pins 18, 20 are inserted, by the protrusion 26 of the lever 14 and by the socket 30 of the shutter 12 into which the protrusion 26 is inserted.

Disassembly and, similarly, assembly, of the lever 14 are facilitated by the special constructional geometry of the socket 30 of the shutter 12 and by the sockets 22,24 of the supporting member 4.

The socket 30 of the shutter 12 has a flared inlet mouth 36.

Thus, when the protrusion 26 is inserted, it is guided into the socket 30. This operation is quick and easy because no equipment or tools are required.

Extraction is also facilitated. Indeed, since the socket 30 of the shutter 12 is substantially larger in size than the first portion 32 of the protrusion 26, the protrusion 26 can be easily extracted from the socket 30 smoothly and without effort.

More specifically, the first portion 32 of the protrusion 26 fits into the socket 30 but not tightly and is therefore free to move inside the socket 30. The connection between the lever 14 and the shutter 12 is made stable by the shape-matched profiles of socket 30 and protrusion 26.

With reference to the socket 22 of the supporting member 4, but with the understanding that the following statements are also applicable to the socket 24, the socket 22 is substantially defined by an elliptic slot 48.

More precisely, as shown in Figure 6, the slot 48 has a profile comprising a first and a second circular stretch 50 and 52 and a third and a fourth straight stretch 54 and 56, the two straight stretches being parallel to each other and connecting the first stretch 50 to the second 52. At the circular stretches 50,52, a first end 58 and a second end 60 of the slot 48 or, more generally speaking, of the socket 22 or 24, are defined.

The inlet mouth 38 of the socket 22 is defined at one of the straight stretches 54 or 56. More specifically, the inlet mouth 38 is flared to allow quick and guided insertion of the pin 18.

Further, the width of the inlet mouth 38 is less than the full length of the slot 48. This solution makes it possible, under normal operating conditions of the lever 14, to keep the pin 18 resting on the second end 60 of the socket 22. This prevents the lever 14 from becoming disengaged from the supporting member 4 during the normal operation of the device 1 (Figure 2).

At the same time, as is explained in more detail below, the position of the inlet mouth 38 of the socket 22 makes it easier for an external operator to disengage the lever 14 without using any tools or equipment.

Moreover, similarly to what was said in connection with the shutter 12 and the protrusion 14, each socket 22,24 of the supporting member 4 is substantially larger in size than the respective pins 18,20 of the lever 14, so as to allow them to be extracted quickly and easily.

According to the preferred embodiment of the lever 14, shown in Figure 5, the second portion 34 of the protrusion 26 is smaller in size than the first portion 32, and hence also smaller than the socket 30 of the shutter 12.

This aspect is extremely convenient during disassembly and assembly of the lever 14.

Also, the size of the second portion 34 is, above all, such as to allow the shutter 12 to be moved when the lever 14 is actuated.

Below is a more detailed description of the steps of assembling and disassembling the device 1, in particular the lever 14 and the shutter 12.

Under normal operating conditions of the device 1, the lever 14 is engaged with the supporting member 4 by inserting the pins 18,20 into the respective sockets 22,24 of the supporting member 4.

More specifically, as shown in Figure 3, the pins 18,20 are positioned at the second end 60 of the respective socket 22,24, thus defining the axis of rotation A of the lever 14 under normal operating conditions.

Disassembly comprises at least one step of turning the lever 14 about the axis B, thereby moving the lever 14 closer to the supporting member 4 so that the pins 18,20 of the lever 14 face the inlet mouth 38,40 of the respective socket 22,24, and at least one step of translating the lever 14 in a direction D away from the supporting member 4 until each pin 18,20 is completely extracted from its socket 22,24 through the respective inlet mouth 38,40 and the protrusion 26 is fully extracted from the socket 30 of the shutter 12 (Figure 2).

Once the lever 14 has been completely disassembled, the shutter 12 can be pulled out of the dispensing duct 6.

It should be noted that under normal operating conditions of the device 1, the pins 18,20 tend to remain resting on the second end 60 of the respective socket 22,24, also thanks to the weight of the lever 14 itself. This is very advantageous in the case of accidentally bumping against the lever 14. In effect, as illustrated in Figure 4, if the lever 14 were to be bumped and accidentally made to turn about the axis B, there would be no risk of the lever 14 becoming disengaged from the supporting member 4, since the pins 18,20 of the lever 14 would remain inside the respective sockets 22,24 and would move temporarily to a position at the first end 58 of the slot 48. Next, under its own weight, the lever 14 would move back to its normal operating position with its pins 18,20 resting on the slot 48 at the second end 60. Furthermore, in the event of accidental bumping, besides exactly positioning the pins 18,20 of the lever 14 to face the inlet mouth of the respective socket 22,24, it would also be necessary to translate the lever 14 in the direction D away from the supporting member 4.

Owing to the geometry of the sockets 22,24 of the supporting member 4 and of the pins 18,20 of the lever 14, when the lever 14 is accidentally bumped, it tends to return spontaneously to normal operating conditions thanks also, as already stated, to its own weight, causing the pins 18,20 to return to the second end 60 of the socket 22,24. The invention as described makes the dispensing duct 6 fully and easily accessible.

It is also possible to quickly and thoroughly clean and sanitize the dispensing duct 6, the lever 14 and the shutter 12.

The procedures for disassembling and assembling the lever 14 are easy to perform without having to use any special tools or equipment.

Moreover, the invention, and in particular the supporting member 4, the shutter 12 and the lever 14 are easy to construct. This allows manufacturing costs to be kept down.

The device 1 is also easy to adapt to any type of machine, as indicated above, and all operations for retrofitting the device 1 in existing machines are characterized by reduced costs and maintenance times.

Furthermore, the device guarantees that if the lever 14 is bumped accidentally, it returns spontaneously to its position for normal use without unwanted disengagement of the lever 14 itself.

## Claims

1. A device for dispensing liquid or semi-liquid food products comprising a supporting member (4), mounted at the outlet of a processing cylinder (2), having a dispensing duct (6) for the processed product; the dispensing duct (6) having a product inlet port (8), in communication with the outlet of the processing cylinder (2), and a product dispensing port (10); the device (1) further comprising a shutter (12), which is at least partly inserted in the dispensing duct (6) and which is movable between a duct (6) and dispensing port (10) closed first position, and a duct (6) and dispensing port (10) open second position, and a shutter (12) actuating lever (14) connected to the supporting member (4), for moving the shutter (12) from the closed first position to the open second position, and vice versa; the device (1) being **characterized in that** it comprises means (16) for rapid assembly/disassembly of the lever (14) to/from the supporting member (4) and **in that** the lever (14) has a first pin (18) and a second pin (20), aligned with each other, which are inserted in respective sockets (22,24) formed in the supporting member (4) to allow the lever (14) to be turned about its own axis (A), and a protrusion (26) which extends from a first end (28) and which fits into a socket (30) formed in the shutter (12); the protrusion (26) allowing the shutter (12) to move from the closed first position to the open second position, and vice versa, when the lever (14) is turned about the axis (A).

2. The device according to either of the preceding claims, **characterized in that** the protrusion (26) has a first portion (32) and a second portion (34); the first portion (32) engaging in the socket (30) of the shutter (12).

3. The device according to any of the preceding claims, **characterized in that** the first portion (32) of the protrusion (26) is substantially cylindrical in shape.

4. The device according to any of the preceding claims, **characterized in that** the socket (30) of the shutter (12) and the first portion (32) of the protrusion (26) have profiles which are shaped to match each other in order to allow rotation of the protrusion (26) relative to the shutter (12), during the movement of the shutter (12) itself, and to form a stable connection between the lever (14) and the shutter (12).

5. The device according to any of the preceding claims, **characterized in that** the means (16) for the rapid assembly/disassembly of the lever (14) to/from the supporting member (4) are defined by the first pin (18) and the second pin (20) of the lever (14), by the sockets (22,24) of the supporting member (4) in which the pins (18,20) are inserted, by the protrusion (26) of the lever (14) and by the socket (30) of the shutter (12) into which the protrusion (26) is inserted.

6. The device according to any of the preceding claims, **characterized in that** the socket (30) of the shutter (12) and the sockets (22,24) of the supporting member (4) have respective flared inlet mouths (36,38,40) to enable rapid insertion of the protrusion (26) and of the pins (18,20), during assembly of the lever (14), and rapid extraction of the protrusion (26) and of the pins (18,20), during disassembly of the lever (14).

7. The device according to any of the preceding claims, **characterized in that** the socket (30) of the shutter (12) is substantially larger in size than the second portion (34) of the protrusion (26) to allow the shutter (12) to move when the lever (14) is turned about its axis (A) and to define the closed first position and the open second position of the shutter (12).

8. The device according to any of the preceding claims, **characterized in that** each socket (22,24) of the supporting member (4) is substantially defined by an elliptic slot (48); the slot (48) comprising a profile having a first circular stretch (50) and a second circular stretch (52) and a third straight stretch (54) and a fourth straight stretch (56), the two straight stretches being parallel to each other and connecting the first stretch (50) to the second (52); each socket (22,24) having a respective inlet mouth (38,40) located at a respective straight stretch (54, 56) of the slot (48).

9. A machine for dispensing liquid or semi-liquid food products comprising product collection bin (102), a product processing cylinder (2) located downstream of the collection bin (102), a motor-driven stirrer (104) connected to the cylinder (2) and designed to mix the product being processed, a cooling and/or heating circuit (106) for the product being processed and/or dispensed, and a product dispensing device (1) according to any of the claims from 1 to 8, mounted at the outlet of the processing cylinder (2).

## Patentansprüche

1. Vorrichtung für flüssige oder halbflüssige Nahrungsmittelprodukte Abgabe eines Stützelements (4) aufweist, an dem Auslass eines Bearbeitungszylinders (2) angebracht, eine Abgabeleitung (6) für das verarbeitete Produkt aufweist; die Abgabeleitung (6) mit einer Produkteinlaßöffnung (8) in Verbindung mit dem Auslass des Bearbeitungszylinders (2) und eine Produktabgabeöffnung (10); die Vorrichtung (1) ferner einen Verschluss (12), die zumindest teilweise eingesetzt in dem Abgabekanal (6) und die sich zwischen einer Leitung (6) und Abgabeöffnung (10) eine erste Position geschlossen ist und einen Kanal bewegbar ist (6) und Abgabeöffnung (10) offenen zweiten Position ist, und einen Verschluß (12) Betätigungshebel (14), der mit dem Tragelement (4) zum Bewegen des Verschlusses (12) aus der geschlossenen ersten Stellung in die zweite offene Position, und umgekehrt; die Vorrichtung (1) **dadurch gekennzeichnet ist, daß** sie Mittel (16) für eine schnelle Montage / Demontage des Hebels (14) zu / von dem Tragelement (4) aufweist und daß der Hebel (14) einen ersten Stift (18) und einen zweiten Stift (20) miteinander ausgerichtet sind, die in entsprechenden Buchsen (22,24) eingesetzt sind in die Stützform Element (4) den Hebel (14) zu erlauben, um ihre eigene Achse (A) und einen Vorsprung (26), die von einem ersten Ende (28) erstreckt und welche passt in eine Fassung (30) gebildet in dem Verschluß gedreht werden (12); der Vorsprung (26), so dass der Verschluss (12) aus der geschlossenen ersten Stellung in die offene zweite Stellung und umgekehrt zu bewegen, wenn der Hebel (14) um die Achse (A) gedreht.

2. Vorrichtung nach einem der vorhergehenden Ansprüche, **dadurch gekennzeichnet, daß** der Vorsprung (26) einen ersten Abschnitt (32) und einen zweiten Abschnitt (34); wobei der erste Abschnitt (32) in der Buchse (30) des Verschlusses (12) eingreift.

3. Vorrichtung nach einem der vorhergehenden Ansprüche, **dadurch gekennzeichnet, daß** der erste Abschnitt (32) des Vorsprungs (26) in Form im wesentlichen zylindrisch ist.

4. Vorrichtung nach einem der vorhergehenden Ansprüche, **dadurch gekennzeichnet, daß** die Buchse (30) des Verschlusses (12) und dem ersten Abschnitt (32) des Vorsprungs (26) haben Profile, die einander so geformt sind, übereinstimmen, um zu ermöglichen, Drehung des Vorsprungs (26) relativ zu dem Verschluß (12) während der Bewegung des Verschlusses (12) selbst, und eine stabile Verbindung zwischen dem Hebel (14) und dem Verschluß (12) zu bilden.

5. Vorrichtung nach einem der vorhergehenden Ansprüche, **dadurch gekennzeichnet, daß** die Mittel (16) für die schnelle Montage/Demontage des Hebels (14) zu / von dem Tragelement (4) durch den ersten Stift definiert sind, (18) und das zweiten Stift (20) des Hebels (14) durch die Buchsen (22,24) des Stützelements (4), in dem die Stifte (18,20) eingesetzt sind, durch den Vorsprung (26) des Hebels (14) und die Buchse (30) des Verschlusses (12), in die der Vorsprung (26) eingesetzt ist.

6. Vorrichtung nach einem der vorhergehenden Ansprüche, **dadurch gekennzeichnet, daß** die Buchse (30) des Verschlusses (12) und die Buchsen (22,24) des Stützelements (4) jeweilige Einlassmündungen abgefackelt (36,38,40) schnelles Einsetzen des Vorsprungs (26) und der Stifte (18,20) während der Montage des Hebels (14) und schnelle Extraktion des Vorsprungs (26) und der Stifte (18,20) zu ermöglichen, während Demontage des Hebels (14).

7. Vorrichtung nach einem der vorhergehenden Ansprüche, **dadurch gekennzeichnet, daß** die Buchse (30) des Verschlusses (12) im wesentlichen in der Größe größer als der zweite Abschnitt (34) des Vorsprungs (26) des Verschlusses zu ermöglichen (12) bewegen, wenn der Hebel (14) um seine Achse (A) gedreht und die geschlossenen ersten Position und der zweiten offenen Position des Verschlusses (12) zu definieren.

8. Vorrichtung nach einem der vorhergehenden Ansprüche, **dadurch gekennzeichnet, daß** jede Buchse (22,24) des Stützelements (4) im wesentlichen durch einen elliptischen Schlitz (48) definiert ist; der Schlitz (48), die ein Profil mit einem ersten kreisförmigen Strecke (50) und einen zweiten kreisförmigen Strecke (52) und einen dritten geraden Strecke (54) und einen vierten geraden Strecke (56), die zwei geraden Strecken parallel zueinander aufweisen und Verbinden der ersten Strecke (50) zu dem zweiten (52); jede Buchse (22,24) eine entsprechende Einlassöffnung (38,40) sich an einer entsprechenden geraden Strecke (54,56) des Schlitzes (48) aufweist.

9. Eine Maschine zur Ausgabe von flüssigen oder halbflüssigen Nahrungsmittelprodukten Produktsammelbehälter (102), eine Produktverarbeitungszylinder (2) stromabwärts des Sammelbehälters (102) ein motorgetriebenes Rührwerk (104), der mit dem Zylinder (2) und gestaltet, um ein Produkt, das verarbeitet zu mischen, ein Kühl- und/oder Heizkreislauf (106) für das Produkt verarbeitet wird und/oder abgegeben wird, und einer Produktabgabevorrichtung (1) nach einem der Ansprüche 1 bis 8, montiert am Auslass des Bearbeitungszylinders (2).

## Revendications

1. Dispositif de distribution de liquides ou semi-liquides, des produits alimentaires, comprenant un élément de support (4), monté à la sortie d'un cylindre de traitement (2), comportant un canal de distribution (6) pour le produit transformé; le conduit de distribution (6) comportant un orifice d'entrée de produit (8), en communication avec la sortie du cylindre de traitement (2), et un produit orifice (10) de distribution; le dispositif (1) comprenant en outre un obturateur (12), qui est au moins partiellement insérée dans le conduit de distribution (6) et qui est mobile entre une conduite (6) et orifice de distribution (10), fermé première position, et un conduit (6) et orifice de distribution (10), seconde position d'ouverture, et un obturateur (12), le levier d'actionnement (14) relié à l'élément de support (4), destiné à déplacer l'obturateur (12) depuis la première position fermée à la deuxième position ouverte, et vice versa; le dispositif (1) étant **caractérisé en ce qu'**il comprend des moyens (16) pour rapide montage/démontage du levier (14) vers / depuis l'élément de support (4), et **en ce que** le levier (14) comporte une première broche (18) et une seconde broche (20), alignées les unes avec les autres, qui sont insérés dans des douilles respectives (22,24) formées dans le soutenant élément (4) pour permettre le levier (14) d'être tourné autour de son propre axe (A), et une saillie (26) qui se prolonge à partir d'une première extrémité (28) et qui se loge dans une douille (30) formée dans l'obturateur (12); la saillie (26) permettant à l'obturateur (12) de se déplacer de la première position fermée à la seconde position ouverte, et vice versa, lorsque le levier (14) est tourné autour de l'axe (A).

2. Le dispositif selon l'une quelconque des revendications précédentes, **caractérisé en ce que** la saillie (26) présente une première partie (32) et une seconde partie (34); la première partie (32) venant en prise dans la douille (30) de l'obturateur (12).

3. Le dispositif selon l'une quelconque des revendications précédentes, **caractérisé en ce que** la première partie (32) de la saillie (26) est sensiblement de forme cylindrique.

4. Le dispositif selon l'une quelconque des revendications précédentes, **caractérisé en ce que** la douille (30) de l'obturateur (12) et la première partie (32) de la saillie (26) ont des profils qui sont conformées pour correspondre à l'autre afin de permettre la rotation de la saillie (26) par rapport à l'obturateur (12), lors du déplacement de l'obturateur (12) lui-même et à former une connexion stable entre le levier (14) et l'obturateur (12).

5. Le dispositif selon l'une quelconque des revendications précédentes, **caractérisé en ce que** les moyens (16) pour le rapide montage / démontage du levier (14) vers / depuis l'élément de support (4) sont définis par la première broche (18) et le deuxième axe (20) du levier (14), les douilles (22,24) de l'élément de support (4), dans lequel les broches (18,20) sont insérés, par la saillie (26) du levier (14) et par la douille (30) de l'obturateur (12) dans laquelle la saillie (26) est insérée.

6. Le dispositif selon l'une quelconque des revendications précédentes, **caractérisé en ce que** la douille (30) de l'obturateur (12) et les douilles (22,24) de l'élément de support (4) ont des embouchures évasées respectives d'entrée (36,38,40) pour permettre une insertion rapide de la saillie (26) et des broches (18,20), lors du montage du levier (14), et une extraction rapide de la saillie (26) et des broches (18,20), au cours d' le démontage du levier (14).

7. Le dispositif selon l'une quelconque des revendications précédentes, **caractérisé en ce que** la douille (30) de l'obturateur (12) est sensiblement plus grande taille que la seconde partie (34) de la saillie (26) pour permettre à l'obturateur (12) pour déplacer quand le levier (14) est tourné autour de son axe (A) et pour définir la première position fermée et la deuxième position ouverte de l'obturateur (12).

8. Le dispositif selon l'une quelconque des revendications précédentes, **caractérisé en ce que** chaque douille (22,24) de l'élément de support (4) est sensiblement définie par une fente elliptique (48); la fente (48) comprenant un profil ayant un premier tronçon circulaire (50) et un second tronçon circulaire (52) et une troisième ligne droite (54) et une quatrième ligne droite (56), les deux lignes droites étant parallèles les uns aux autres et relier le premier tronçon (50) au second (52); chaque douille (22,24) ayant une embouchure d'entrée respectif (38,40) situé à une ligne droite respective (54,56) de la fente (48) .

9. Machine pour la distribution de produits alimentaires liquides ou semi-liquides, comprenant la récupération du produit casier (102), un cylindre de traitement de produits (2) situé en aval du bac de collecte (102), d'un agitateur entraîné par un moteur (104) relié au cylindre (2) et conçu pour mélanger le produit en cours de traitement, un circuit (106) de refroidissement et/ou le chauffage du produit en cours de traitement et/ou à distribuer, et un dispositif de distribution de produit (1) selon l'une quelconque des revendications 1 à 8, montées à la sortie du cylindre de traitement (2).
